(19) **Europäisches Patentamt**
**European Patent Office**
**Office européen des brevets**

(11) **EP 4 269 478 A1**

(12) **EUROPEAN PATENT APPLICATION**
published in accordance with Art. 153(4) EPC

(43) Date of publication:
**01.11.2023 Bulletin 2023/44**

(21) Application number: **22911546.4**

(22) Date of filing: **12.10.2022**

(51) International Patent Classification (IPC):
*C08J 3/24* (2006.01)          *C08J 3/12* (2006.01)
*C08F 20/06* (2006.01)        *C08F 4/40* (2006.01)
*C08J 9/00* (2006.01)          *C08J 9/08* (2006.01)

(52) Cooperative Patent Classification (CPC):
**C08F 4/40; C08F 20/06; C08J 3/12; C08J 3/24;
C08J 9/00; C08J 9/08**

(86) International application number:
**PCT/KR2022/015332**

(87) International publication number:
**WO 2023/120907 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.12.2021  KR 20210187268
11.10.2022  KR 20220129533**

(71) Applicant: **Lg Chem, Ltd.
Seoul 07336 (KR)**

(72) Inventors:
• **KIM, Kihoon**
  **Daejeon 34122 (KR)**
• **LEE, Hyemin**
  **Daejeon 34122 (KR)**
• **HAN, Chang Hun**
  **Daejeon 34122 (KR)**
• **SOHN, Jungmin**
  **Daejeon 34122 (KR)**

(74) Representative: **Plasseraud IP
66, rue de la Chaussée d'Antin
75440 Paris Cedex 09 (FR)**

(54) **PREPARATION METHOD FOR SUPER ABSORBENT POLYMER**

(57)     The present disclosure relates to a preparation method for a super absorbent polymer capable of minimizing bubble loss during foam polymerization by a radical polymerization method. According to the preparation method of the present disclosure, a super absorbent polymer having a high surface area can be manufactured by forming many small and uniform pores. Since it exhibits an excellent absorption rate, it can be used in various products requiring high absorption properties.

EP 4 269 478 A1

**Description**

[TECHNICAL FIELD]

Cross-reference to Related Application

This application claims the benefit of Korean Patent Applications No. 1 0-2021-0187268 filed on December 24, 2021 and No. 10-2022-0129533 filed on October 11, 2022 with the Korean Intellectual Property Office, the disclosures of which are incorporated herein by reference in their entirety.

The present disclosure relates to a preparation method for a super absorbent polymer.

[BACKGROUND OF ART]

A super absorbent polymer (SAP) is a type of synthetic polymeric material capable of absorbing 500 to 1000 times its own weight of moisture. Such super absorbent polymers started to be practically applied in sanitary products, and they are now being widely used not only for hygiene products such as paper diapers for children, but also for water retaining soil products for gardening, water stop materials for the civil engineering and construction, sheets for raising seedling, fresh-keeping agents for food distribution fields, materials for poultices, or the like.

In order to improve the absorption rate of the super absorbent polymer, a method of forming a porous structure by adding a foaming agent during polymerization is known. Carbon dioxide gas generated when the acrylic acid-based monomer, which is the main raw material of the super absorbent polymer, meets the foaming agent forms several pores on the surface of the super absorbent polymer, thereby increasing the surface area of the super absorbent polymer and improving the absorption rate.

However, in the case of the conventional radical polymerization method using a photoinitiator, a large amount of carbon dioxide gas is lost before the monomer composition in the fluid phase is converted into the solid phase during polymerization, so that a desired level of porosity cannot be achieved.

Therefore, in regards to the preparation method for a super absorbent polymer using a foaming agent, a method capable of compensating for the above limitation during the radical polymerization is required.

[DETAILED DESCRIPTION OF THE INVENTION]

[Technical Problem]

In order to solve the above problem, there is provided a preparation method for a super absorbent polymer capable of minimizing bubble loss during foam polymerization by a radical polymerization method.

[Technical Solution]

In the present disclosure, there is provided a preparation method for a super absorbent polymer, including the steps of:

> preparing a monomer composition by mixing an acrylic acid-based monomer having at least partially neutralized acidic groups; an internal cross-linking agent; a photoinitiator; a thermal initiator; a foaming agent; and a reducing agent and an oxidizing agent forming a redox pair with each other,
> preparing a hydrogel polymer by cross-linking polymerization of the monomer composition,
> forming a base resin in the form of powder by drying and pulverizing the hydrogel polymer, and
> forming a surface cross-linked layer by further cross-linking a surface of the base resin in the presence of a surface cross-linking agent,
> wherein each of the reducing agent and the oxidizing agent is contained in an amount of greater than 1 mol to 13 mol or less based on 1 mol of the photoinitiator.

[ADVANTAGEOUS EFFECTS]

According to the preparation method of the present disclosure, bubble loss during foam polymerization by a radical polymerization method can be minimized, and thus, a super absorbent polymer having many small and uniform pores can be obtained. The super absorbent polymer exhibits a significantly improved absorption rate due to its high surface area, and excellent absorption properties such as water retention capacity and absorbency under load, so that it can be used in various products requiring high absorbency.

[DETAILED DESCRIPTION OF THE EMBODIMENTS]

The terminology used herein is for the purpose of describing particular embodiments only and is not intended to limit the invention. The singular forms are intended to include the plural forms as well, unless the context clearly indicates otherwise. It will be further understood that the terms "include", "have", or "possess" when used in this specification, specify the presence of stated features, steps, components, or combinations thereof, but do not preclude the presence or addition of one or more other features, steps, components, or combinations thereof.

As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

As used herein, the "base resin" or "base resin powder" is prepared in the form of particles or powder by drying and pulverizing a polymer obtained by polymerization of a water-soluble ethylene-based unsaturated monomer, and refers to a polymer in which surface modification or surface cross-linking has not been performed.

Hereinafter, the preparation method for a super absorbent polymer of the present disclosure will be described in more detail.

In the industrial manufacturing process of super absorbent polymers, polymerization of an acrylic acid-based monomer, which is a main raw material, is typically performed by a radical polymerization method using a photoinitiator in a reactor equipped with a conveyor belt. This polymerization method has an advantage that continuous polymerization is possible. However, in the case of foam polymerization using a foaming agent, there is a problem in that the amount of carbon dioxide gas lost is large, wherein the carbon dioxide gas is generated when the foaming agent meets the monomer and lost to the atmosphere before the monomer composition is polymerized to a solid phase. When the carbon dioxide gas bubbles are lost as described above, the degree of foaming of the super absorbent polymer is lowered compared to the amount of the foaming agent added, and consequently, the effect of improving the absorption rate cannot be sufficiently obtained.

Accordingly, the present inventors have studied a method for preventing the bubble loss even during continuous radical polymerization using a conveyor belt. As a result, they have confirmed that when a reducing agent and an oxidizing agent forming an oxidation and reduction pair with each other, that is, a redox pair, are added in the monomer composition, and the content thereof is more than 1 mol to 13 mol or less based on 1 mol of the photoinitiator included in the monomer composition, the loss of bubbles generated from the foaming agent is minimized and a large amount of smaller bubbles are generated to obtain a super absorbent polymer having a high degree of foaming, thereby completing the present invention.

Thus, the preparation method for a super absorbent polymer according to one embodiment of the present disclosure is characterized in that the preparation method includes the steps of:

preparing a monomer composition by mixing an acrylic acid-based monomer having at least partially neutralized acidic groups; an internal cross-linking agent; a photoinitiator; a thermal initiator; a foaming agent; and a reducing agent and an oxidizing agent forming a redox pair with each other,
preparing a hydrogel polymer by cross-linking polymerization of the monomer composition,
forming a base resin in the form of powder by drying and pulverizing the hydrogel polymer, and
forming a surface cross-linked layer by further cross-linking a surface of the base resin in the presence of a surface cross-linking agent,
wherein each of the reducing agent and the oxidizing agent is contained in an amount of greater than 1 mol to 13 mol or less based on 1 mol of the photoinitiator.

The acrylic acid-based monomer is a compound represented by the following Chemical Formula 1:

$$[\text{Chemical Formula 1}] \qquad R^1\text{-COOM}^1$$

in Chemical Formula 1,
$R^1$ is a C2 to C5 alkyl group having an unsaturated bond, and
$M^1$ is a hydrogen atom, a monovalent or divalent metal, an ammonium group, or an organic amine salt.

Preferably, the acrylic acid-based monomer may include at least one selected from the group consisting of acrylic acid, methacrylic acid, and a monovalent metal salt, a divalent metal salt, an ammonium salt and an organic amine salt thereof.

Herein, the acrylic acid-based monomers may be those having acidic groups which are at least partially neutralized. Preferably, the acrylic acid-based monomer partially neutralized with an alkali substance such as sodium hydroxide, potassium hydroxide, ammonium hydroxide, or the like may be used. A degree of neutralization of the acrylic acid-based monomer may be 40 to 95 mol%, 40 to 80 mol%, or 45 to 75 mol%. The range of the degree of neutralization can be adjusted according to final properties. An excessively high degree of neutralization causes the neutralized monomers to be precipitated, and thus polymerization may not readily occur. On the contrary, an excessively low degree of neutralization not only deteriorates absorbency of the polymer, but also gives the polymer hard-to-handle properties, such as those of an elastic rubber.

In addition, a concentration of the acrylic acid-based monomer may be about 20 to 60 wt%, preferably about 40 to 50 wt% based on the monomer composition containing the raw materials of the super absorbent polymer and the solvent, and properly controlled in consideration of polymerization time and reaction conditions. When the concentration of the monomer is excessively low, the yield of the super absorbent polymer is low and there may be a problem in economic efficiency. In contrast, when the concentration is excessively high, it may cause problems in processes in that some of the monomer may be extracted or the pulverization efficiency of the polymerized hydrogel polymer may be lowered in the pulverization process, and thus physical properties of the super absorbent polymer may be deteriorated.

The photoinitiator (photopolymerization initiator) used during polymerization in the preparation method for a super absorbent polymer of the present disclosure is not particularly limited if it is generally used in the preparation of super absorbent polymers.

Meanwhile, even when the photopolymerization method is applied, a certain amount heat is generated by UV radiation and the like, and some heat occurs as the polymerization reaction, an exothermal reaction, progresses. Therefore, a thermal initiator (thermal polymerization initiator) is used together with the photoinitiator in the present disclosure.

Any compound which can form a radical by light such as UV rays may be used as the photoinitiator without limitation.

For example, the photoinitiator may be one or more compounds selected from the group consisting of benzoin ether, dialkyl acetophenone, hydroxyl alkylketone, phenyl glyoxylate, benzyl dimethyl ketal, acyl phosphine, and α-aminoketone. Further, as the specific example of acyl phosphine, commercial Lucirin TPO (Diphenyl(2,4,6-trimethylbenzoyl)phosphine oxide), or Irgacure 819 (Bis(2,4,6-trimethylbenzoyl)phenylphosphine oxide) may be used. More various photoinitiators are well disclosed in "UV Coatings: Basics, Recent Developments and New Application (Elsevier, 2007)" written by Reinhold Schwalm, p 115, and the present disclosure is not limited thereto.

The photoinitiator may be contained in an amount of 0.001 parts by weight or more, 0.005 parts by weight or more, or 0.007 parts by weight or more, and 0.1 parts by weight or less, 0.05 parts by weight or less, or 0.01 parts by weight or less based on 100 parts by weight of the acrylic acid-based monomer. When the content of the photoinitiator is too low, the polymerization rate may become slow, and when the content of the photoinitiator is too high, the molecular weight of the super absorbent polymer may become low and properties may be uneven.

In addition, as the thermal initiator, at least one selected from the initiator group consisting of a persulfate-based initiator, an azo-based initiator, hydrogen peroxide, and ascorbic acid may be used. Specifically, sodium persulfate ($Na_2S_2O_8$), potassium persulfate ($K_2S_2O_8$), ammonium persulfate (($NH_4$)$_2S_2O_8$), and the like may be used as examples of the persulfate-based initiator; and 2,2-azobis-(2-amidinopropane) dihydrochloride, 2,2-azobis-(N,N-dimethylene)isobutyramidine dihydrochloride, 2-(carbamoylazo)isobutylonitril, 2,2-azobis[2-(2-imidazolin-2-yl)propane] dihydrochloride, 4,4-azobis-(4-cyanovaleric acid), and the like may be used as examples of the azo-based initiator. More various thermal initiators are well disclosed in "Principle of Polymerization (Wiley, 1981)" written by Odian, p 203, and the present disclosure is not limited thereto.

The thermal initiator may be contained in an amount of 0.1 parts by weight or more, 0.15 parts by weight or more, or 0.2 parts by weight or more, and 1 parts by weight or less, 0.8 parts by weight or less, 0.6 parts by weight or less, or 0.4 parts by weight or less based on 100 parts by weight of the acrylic acid-based monomer. When the content of the thermal initiator is less than 0.1 parts by weight based on 100 parts by weight of the acrylic acid-based monomer, the amount of the monomer remaining unreacted may increase, and when it exceeds 1 parts by weight, discoloration of the resin may occur.

The monomer composition according to an embodiment of the present disclosure contains an internal cross-linking agent. The internal cross-linking agent is used for cross-linking the inside of the polymer in which the acrylic acid monomer is polymerized, and is distinguished from a surface cross-linking agent for cross-linking the surface of the polymer.

For example, the internal cross-linking agent may be at least one selected from the group consisting of N,N'-methylenebisacrylamide, trimethylolpropane tri(meth)acrylate, ethylene glycol di(meth)acrylate, (meth)acrylate, propylene glycol di(meth)acrylate, polyethylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate.

The internal cross-linking agent may be contained in an amount of 0.01 parts by weight or more, 0.05 parts by weight or more, 0.1 parts by weight or more, or 0.5 parts by weight or more, and 2 parts by weight or less, 1.5 parts by weight or less, or 1 parts by weight or less based on 100 parts by weight of acrylic acid.

As the foaming agent, an organic foaming agent and/or an inorganic foaming agent commonly used in the manufacture of the super absorbent polymer may be used without limitation, and for example, a carbonate-based foaming agent, a capsule-type foaming agent, and the like may be used. Among these foaming agents, a carbonate-based foaming agent that is relatively inexpensive and easily generates carbon dioxide gas under acidic conditions can be preferably used.

For example, at least one selected from the group consisting of sodium bicarbonate, sodium carbonate, potassium bicarbonate, potassium carbonate, calcium bicarbonate, calcium carbonate, magnesium bicarbonate, and magnesium carbonate may be used as the carbonate-based foaming agent, but the present disclosure is not limited thereto.

The foaming agent may be used in an amount of 0.05 parts by weight or more, 0.1 parts by weight or more, or 0.2 parts by weight or more, and 5 parts by weight or less, 3 parts by weight or less, 1 parts by weight or less, or 0.5 parts by weight or less based on 100 parts by weight of the acrylic acid-based monomer. When the content of the foaming agent is too low, the super absorbent polymer to be prepared may not have sufficient porosity due to insufficient bubbles during polymerization. When the content of the foaming agent is too high, porosity of the super absorbent polymer may be excessively high, and thus there may be a problem in that mechanical strength is lowered.

As the reducing agent and the oxidizing agent, organic and/or inorganic compounds known to form a redox pair with each other may be used. For example, the reducing agent may be sodium metabisulfite, and the oxidizing agent may be sodium persulfate, potassium persulfate, or ammonium persulfate. Alternatively, the reducing agent may be ascorbic acid, and the oxidizing agent may be hydrogen peroxide.

For example, sodium metabisulfite and sodium persulfate; or ascorbic acid and hydrogen peroxide may be included as a redox pair.

The reducing agent and the oxidizing agent, that is, the redox pair, cause an oxidation-reduction reaction with each other in the monomer composition, and radicals generated through the oxidation-reduction reaction of the redox pair initiate polymerization before photopolymerization begins. Therefore, when the redox pair is contained in the monomer composition, the photopolymerization rate is increased compared to the case without the redox pair, and since polymerization can proceed before significant loss of carbon dioxide, bubble loss can be minimized.

In order to ensure the above effect, each of the reducing agent and the oxidizing agent is contained in an amount of more than 1 mol to 13 mol or less based on 1 mol of the photoinitiator. Preferably, each is contained in an amount of 1.3 mol or more, or 2 mol or more, and 12 mol or less, 10 mol or less, or 7 mol or less based on 1 mol of the photoinitiator. When the content of the redox pair is 1 mol or less based on 1 mol of the photoinitiator, the effect of reducing bubble loss cannot be secured. When it exceeds 13 mol, the effect of reducing bubble loss does not increase any more, and absorbency of the super absorbent polymer may be reduced.

Meanwhile, each of the reducing agent and the oxidizing agent may be contained in an amount of more than 0.0015 mol%, 0.002 mol% or more, or 0.003 mol% or more, and less than 0.02 mol%, 0.015 mol% or less, or 0.01 mol% or less based on 100 mol% of the acrylic acid-based monomer.

Herein, a molar ratio of the reducing agent and the oxidizing agent may be 1:1 to 1:2, or 1:1 to 1:1.5.

The monomer composition may further include an additive such as a thickener, a plasticizer, a preservation stabilizer, and an antioxidant, if necessary.

The monomer composition may be prepared by mixing the raw materials, that is, an acrylic acid-based monomer having at least partially neutralized acidic groups, an internal cross-linking agent, a photoinitiator, a thermal initiator, a foaming agent, and a reducing agent and an oxidizing agent forming a redox pair with each other in a solvent.

At this time, any solvent which can dissolve the above components may be used without limitation. For example, the solvent may be in combination of at least one selected from water, ethanol, ethyleneglycol, diethyleneglycol, triethyleneglycol, 1,4-butanediol, propyleneglycol, ethyleneglycol monobutylether, propyleneglycol monomethylether, propyleneglycol monomethylether acetate, methylethylketone, acetone, methylamylketone, cyclohexanone, cyclopentanone, diethyleneglycol monomethylether, diethyleneglycol ethylether, toluene, xylene, butyrolactone, carbitol, methylcellosolve acetate, and N,N-dimethylacetamide.

Meanwhile, in one embodiment of the present disclosure, the monomer composition may be prepared by the steps of: i) adding an alkali material to a mixture containing an acrylic acid-based monomer, an internal cross-linking agent, and a photoinitiator to neutralize at least a portion of acidic groups of the acrylic acid-based monomer, and ii) adding a thermal initiator, a foaming agent, and a reducing agent and an oxidizing agent forming a redox pair with each other to the mixture obtained in step i). When the monomer composition is prepared by the above method, stability of the process can be secured by introducing the redox pair as late as possible while providing time for the monomer solution to be sufficiently mixed.

The polymerization of the monomer composition is performed by radical polymerization with light irradiation, and for example, may be carried out in a reactor equipped with a movable conveyor belt. When the polymerization is performed in the reactor as described above, a hydrogel polymer in the form of a sheet having a belt width may be obtained. A thickness of the hydrogel polymer sheet may vary depending on the concentration and injection rate of the monomer composition to be injected, and it is preferable to supply the monomer composition so that the polymer in the form of a sheet has a thickness of about 0.5 to about 5 cm. When the monomer composition is supplied to such an extent that the thickness of the polymer sheet is too thin, the production efficiency may be low. When the thickness of the polymer sheet exceeds 5 cm, the polymerization reaction may not occur evenly over the entire thickness due to the excessively thick thickness.

The polymerization temperature of the monomer composition is not particularly limited, but may be, for example, 80 to 120 °C, preferably 90 to 110 °C.

Generally, the moisture content of the hydrogel polymer may be about 40 to about 80 wt%. At this time, "moisture content" in the present disclosure is the content of moisture in the entire weight of the polymer, and it means a value of which the weight of the dried polymer is subtracted from the weight of the polymer. Specifically, the moisture content is defined as a value calculated by measuring the weight loss due to moisture evaporation from the polymer in the process of increasing the temperature of the polymer for drying through infrared heating. At this time, the drying condition for measuring the moisture content is as follows: the temperature is increased to about 180 °C and maintained at 180 °C, and the total drying time is 20 minutes including 5 minutes of a heating step.

Next, a step of drying the obtained hydrogel polymer is performed.

If necessary, coarse pulverization may be further performed before drying to increase the efficiency of the drying step.

At this time, there is no limitation in the configuration of the pulverizing machine used. Specifically, at least one pulverizing machine selected from the group consisting of a vertical pulverizer, a turbo cutter, a turbo grinder, a rotary cutter mill, a cutter mill, a disc mill, a shred crusher, a crusher, a chopper and a disc cutter may be used, but the present disclosure is not limited thereto.

In the pulverization step, the hydrogel polymer may be pulverized so that the particle diameter is about 2 to about 10 mm.

Pulverization to a particle diameter of less than 2 mm is not technically easy due to the high moisture content of the hydrogel polymer, and a phenomenon of agglomeration between the pulverized particles may occur. On the other hand, when pulverized to a particle diameter of more than 10 mm, the effect of increasing the efficiency of the subsequent drying step is insignificant.

Drying is performed on the hydrogel polymer that has been pulverized as described above or immediately after polymerization without the pulverization step. The drying temperature in the drying step may be about 150 to about 250 °C. When the drying temperature is less than 150 °C, the drying time may become excessively long and physical properties of the super absorbent polymer to be finally formed may decrease. When the drying temperature is more than 250 °C, only the surface of the polymer is excessively dried, fine powder may be generated in the subsequent pulverization process, and physical properties of the final super absorbent polymer may decrease. Therefore, the drying may preferably be performed at a temperature of about 150 to about 200 °C, more preferably at a temperature of about 160 to about 180 °C.

Meanwhile, the drying time may be about 20 minutes to about 90 minutes in consideration of process efficiency, but is not limited thereto.

The drying method in the drying step is not particularly limited if it has been generally used in the drying process of the hydrogel polymer. Specifically, the drying step may be performed by the method of hot air provision, infrared radiation, microwave radiation, UV ray radiation, and the like. After the drying step, the moisture content of the polymer may be about 0.1 to about 10 wt%.

Subsequently, a step of pulverizing the dried polymer obtained through the drying step is performed.

The polymer powder obtained after the pulverization step may have a particle diameter of about 150 to about 850 $\mu$m. As the pulverizing machine used for pulverization to such a particle diameter, a pin mill, a hammer mill, a screw mill, a roll mill, a disc mill, a jog mill, or the like may be used, but the present disclosure is not limited thereto.

In addition, a separate process of classifying the polymer powder obtained after the pulverization step according to particle size may be performed, and the polymer powder may be classified in a predetermined weight ratio according to the particle size.

Subsequently, a surface of the dried and pulverized polymer, that is, the base resin, is further cross-linked to form a surface cross-linked layer.

Specifically, a surface cross-linking agent is mixed with the base resin, and then heat is applied to the mixture to perform a surface cross-linking reaction on the pulverized polymer.

The surface cross-linking step is a step of inducing a cross-linking reaction on the surface of the base resin in the presence of a surface cross-linking agent, thereby forming a super absorbent polymer having improved physical properties. Through the surface cross-linking, a surface cross-linked layer (surface-modified layer) is formed on the surface of the base resin.

The surface cross-linking agent is applied on the surface of super absorbent polymer particles. Therefore, surface cross-linking reactions occur on the surface of the super absorbent polymer particles, which improves cross-linkability on the surface of the particles without substantially affecting the inside of the particles. Thus, the surface cross-linked super absorbent polymer particles have a higher degree of cross-linking at the surface than inside.

Meanwhile, as the surface cross-linking agent, a compound capable of reacting with a functional group of the polymer is used. For example, a polyalcohol-based compound, a polyepoxy-based compound, a polyamine compound, a haloepoxy compound, a condensation product of a haloepoxy compound, an oxazoline-based compound, or an alkylene carbonate-based compound may be used.

Specifically, as the polyalcohol-based compound, at least one selected from the group consisting of di-, tri-, tetra- or polyethylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, and 1,2-cyclohexane dimethanol may be used.

In addition, as the polyepoxy-based compound, ethylene glycol diglycidyl ether, polyethylene glycol diglycidyl ether, or glycidol may be used. As the polyamine compound, at least one selected from the group consisting of ethylenediamine, diethylenetriamine, triethylenetetraamine, tetraethylenepentamine, pentaethylenehexamine, polyethyleneimine and polyamide polyamine may be used.

Further, as the haloepoxy compound, epichlorohydrin, epibromohydrin, or $\alpha$-methylepichlorohydrin, may be used. Meanwhile, as the mono-, di-, or polyoxazolidinone compound, 2-oxazolidinone may be used.

In addition, as the alkylene carbonate-based compound, ethylene carbonate or the like may be used. They may be used alone or in combination with each other.

The content of the surface cross-linking agent added may be appropriately selected depending on the type of the added surface cross-linking agent or reaction conditions, and may be about 0.001 to about 5 parts by weight, preferably about 0.01 to about 3 parts by weight, more preferably about 0.05 to about 2 parts by weight based on 100 parts by weight of the base resin.

When the content of the surface cross-linking agent is too low, the surface cross-linking reaction hardly occurs. When the content of the surface cross-linking agent exceeds 5 parts by weight based on 100 parts by weight of the polymer, absorption properties such as water retention capacity may be deteriorated due to the excessive surface cross-linking reaction.

In addition, the method of adding the surface cross-linking agent to the base resin powder is not particularly limited. For example, a method of adding the surface cross-linking agent and the base resin powder in a reactor for mixing, a method of spraying the surface cross-linking agent onto the base resin powder, or a method of mixing the base resin powder and the surface cross-linking agent while continuously providing them to a continuously operating mixer may be used.

When adding the surface cross-linking agent, water may be additionally mixed and added in the form of a surface cross-linking solution. When water is added thereto, there is an advantage that the surface cross-linking agent may be evenly dispersed in the polymer. At this time, amounts of water to be added may be properly controlled for the purposes of inducing a uniform dispersion of the surface cross-linking agent, preventing an agglomeration phenomenon of the polymer powder, and optimizing a surface penetration depth of the surface cross-linking agent. For example, water may preferably be added in an amount of about 1 to about 10 parts by weight based on 100 parts by weight of the base resin.

Meanwhile, the surface modification is performed on the base resin by heating the mixture of the base resin and the surface cross-linking solution to increase the temperature.

The surface modification may be performed under well-known conditions depending on the type of the surface cross-linking agent, for example, may be performed at a temperature of 100 to 200 °C for 20 to 60 minutes. In a more specific embodiment, when the surface cross-linking agent is a polyvalent epoxy-based compound, it may be performed by heating for about 10 to about 50 minutes, or about 20 to about 40 minutes at a temperature of about 120 to about 180 °C, or about 120 to about 150 °C. When the temperature of the surface modification is less than 100 °C, or the reaction time is too short, the surface cross-linking reaction does not occur properly and transmittance may be lowered. When the temperature exceeds 200 °C, or the reaction time is too long, a problem of lowering water retention capacity may occur.

The heating means for the surface cross-linking reaction is not particularly limited. It is possible to provide a thermal media thereto or provide a heat source directly thereto. At this time, usable thermal media may be a heated fluid such as steam, hot air, hot oil, and the like, but the present invention is not limited thereto. Furthermore, the temperature of the thermal media provided thereto may be properly selected in consideration of the means of the thermal media, heating speed, and target temperature of heating. Meanwhile, an electric heater or a gas heater may be used as the heat source provided directly, but the present disclosure is not limited thereto.

After the surface modification, a process of classifying the obtained super absorbent polymer powder according to particle size may be additionally performed.

The super absorbent polymer prepared according to the preparation method has a porous structure in which a large number of small and uniform pores are formed, thereby exhibiting excellent absorption properties.

For example, the super absorbent polymer may have a vortex time (absorption rate) of 35 seconds or less, 33 seconds or less, 30 seconds or less, 29 seconds or less, or 25 seconds or less. As the lower vortex time can be evaluated as the better, the lower limit is theoretically 0 seconds, but may be 5 seconds or more, 10 seconds or more, or 12 seconds or more.

In addition, the super absorbent polymer may have centrifuge retention capacity (CRC) of 25 g/g or more, 29 g/g or more, or 32 g/g or more, and 40 g/g or less, 38 g/g or less, or 35 g/g or less, when measured according to the method of EDANA WSP 241.3.

In addition, the super absorbent polymer may have absorbency under load (AUL) at 0.9 psi of 20 g/g or more, or 22 g/g or more, and 35 g/g or less, 33 g/g or less, or 30 g/g or less, when measured according to the method of EDANA WSP 242.3.

Hereinafter, the present invention will be described in more detail with the following preferred examples, but these examples are provided for illustrative purposes only. It is apparent to those skilled in the art that various changes and modifications can be made within the scope and spirit of the present invention. Therefore, it is obvious that the changes and modifications are within the scope of the present invention.

[Examples]

**Example 1**

A monomer solution was prepared by mixing 0.5 parts by weight of polyethylene glycol diacrylate (weight average molecular weight: 500 g/mol) as an internal cross-linking agent, and 0.009 parts by weight of Irgacure® 819 (bis(2,4,6-trimethylbenzoyl)-phenylphosphine oxide, manufactured by Ciba) as a photoinitiator with 100 parts by weight of acrylic acid. Subsequently, while continuously supplying the monomer solution to a metering pump, 140 parts by weight of a 31 wt% sodium hydroxide aqueous solution was continuously line-mixed to prepare a monomer aqueous solution. At this time, after confirming that the temperature of the monomer aqueous solution had risen to about 72 °C or higher by the heat of neutralization, the solution was allowed to stand until the temperature was cooled to 40 °C. When cooled down to the temperature of 40 °C, 0.225 parts by weight of solid sodium bicarbonate as a foaming agent and 5.6 parts by weight of a 4 wt% sodium persulfate aqueous solution as a thermal initiator were added to the monomer aqueous solution. Then, each of sodium metabisulphite (SMBS) and sodium persulfate (SPS) were added in an amount of 0.018 mol% based on 100 mol% of acrylic acid, respectively, as a reducing agent and an oxidizing agent forming a redox pair. The solution was poured into a Vat-type tray (15 cm wide x 15 cm long) installed in a square polymerizer, wherein the polymerizer was provided with a light irradiation device on the top and preheated to 80 °C, and then light irradiation was performed to initiate polymerization. After light irradiation for 60 seconds, the reaction was further performed for 120 seconds to obtain a sheet-shaped hydrogel polymer.

After uniformly spraying 150 g of water to the hydrogel polymer for lubrication, pulverization was performed with a chopper having a 10 mm hole plate. Then, the pulverized hydrogel polymer was dried in a dryer capable of changing wind direction up and down. The hydrogel polymer was uniformly dried by flowing hot air at 180 °C from the bottom to the top for 15 minutes, and then flowing from the top to the bottom for 15 minutes, so that the moisture content of the dried powder was less than about 2%. The dried polymer was pulverized with a pulverizing machine, and then classified to obtain a base resin powder having a size of 150 to 850 μm.

10 g of a surface cross-linking agent aqueous solution containing 0.12 parts by weight of polyethylene glycol diglycidyl ether (Glyether® EJ1030S, manufactured by JSI) was sprayed onto 100 parts by weight of the base resin powder, and stirred at room temperature to mix the surface cross-linking agent aqueous solution evenly on the base resin powder. Then, the base resin powder mixed with the surface cross-linking solution was put into a surface cross-linking reactor, and the surface cross-linking reaction was performed at 140 °C for 40 minutes. Thereafter, the powder obtained after the surface cross-linking reaction was classified with a ASTM standard mesh to obtain a super absorbent polymer having a particle diameter of 150 to 850 μ m.

**Example 2**

A super absorbent polymer was prepared in the same manner as in Example 1, except that each of SMBS and SPS were added to the monomer aqueous solution in an amount of 0.01 mol% based on 100 mol% of acrylic acid.

**Example 3**

A super absorbent polymer was prepared in the same manner as in Example 1, except that each of SMBS and SPS were added to the monomer aqueous solution in an amount of 0.005 mol% based on 100 mol% of acrylic acid.

**Example 4**

A super absorbent polymer was prepared in the same manner as in Example 1, except that each of SMBS and SPS were added to the monomer aqueous solution in an amount of 0.003 mol% based on 100 mol% of acrylic acid.

**Example 5**

A super absorbent polymer was prepared in the same manner as in Example 1, except that each of ascorbic acid and hydrogen peroxide were added in an amount of 0.018 mol% based on 100 mol% of acrylic acid, instead of SMBS and SPS as a redox pair in the monomer aqueous solution.

**Example 6**

A super absorbent polymer was prepared in the same manner as in Example 1, except that each of ascorbic acid and hydrogen peroxide were added in an amount of 0.01 mol% based on 100 mol% of acrylic acid, instead of SMBS and SPS as a redox pair in the monomer aqueous solution.

**Example 7**

A super absorbent polymer was prepared in the same manner as in Example 1, except that each of ascorbic acid and hydrogen peroxide were added in an amount of 0.005 mol% based on 100 mol% of acrylic acid, instead of SMBS and SPS as a redox pair in the monomer aqueous solution.

**Example 8**

A super absorbent polymer was prepared in the same manner as in Example 1, except that each of ascorbic acid and hydrogen peroxide were added in an amount of 0.003 mol% based on 100 mol% of acrylic acid, instead of SMBS and SPS as a redox pair in the monomer aqueous solution.

**Comparative Example 1**

A super absorbent polymer was prepared in the same manner as in Example 1, except that the redox pair was not added to the monomer aqueous solution.

**Comparative Example 2**

A super absorbent polymer was prepared in the same manner as in Example 1, except that each of SMBS and SPS were added to the monomer aqueous solution in an amount of 0.02 mol% based on 100 mol% of acrylic acid.

**Comparative Example 3**

A super absorbent polymer was prepared in the same manner as in Example 1, except that each of SMBS and SPS were added to the monomer aqueous solution in an amount of 0.0015 mol% based on 100 mol% of acrylic acid.

**Comparative Example 4**

A super absorbent polymer was prepared in the same manner as in Example 1, except that each of ascorbic acid and hydrogen peroxide were added in an amount of 0.02 mol% based on 100 mol% of acrylic acid, instead of SMBS and SPS as a redox pair in the monomer aqueous solution.

**Comparative Example 5**

A super absorbent polymer was prepared in the same manner as in Example 1, except that each of ascorbic acid and hydrogen peroxide were added in an amount of 0.0015 mol% based on 100 mol% of acrylic acid, instead of SMBS and SPS as a redox pair in the monomer aqueous solution.

**Experimental Examples**

The physical properties of the super absorbent polymers of Examples and Comparative Examples were measured in the following manner, and the results are summarized in Table 1.

(1) Centrifuge retention capacity (CRC)

The centrifuge retention capacity of each super absorbent polymer was measured according to the EDANA WSP 241.3.

After inserting 0.2 g (W0) of the super absorbent polymer sample having a particle diameter of 300 to 600 $\mu$m uniformly in a nonwoven fabric envelope and sealing the same, it was soaked in saline (0.9 wt% sodium chloride aqueous solution) at room temperature. After 30 minutes, the envelope was centrifuged at 250G for 3 minutes to drain, and the weight W2 (g) of the envelope was measured. Further, after carrying out the same operation without using the resin, the weight W1 (g) of the envelope was measured. Then, CRC (g/g) was calculated by using the obtained weight values according to the following Equation.

[Equation 1]

$$CRC \ (g/g) = \{[W2(g) - W1(g)]/W0(g)\} - 1$$

(2) Absorbency under load at 0.9 psi (0.9 AUL)

The absorbency under load at 0.9 psi of each polymer was measured according to the EDANA WSP 242.3. In the measurement, a super absorbent polymer sample having a particle diameter of 300 to 600 $\mu$m was used as in the CRC measurement.

A 400 mesh stainless steel screen was installed in a cylindrical bottom of a plastic having an inner diameter of 25 mm. W3 (g, 0.16 g) of the super absorbent polymer was uniformly scattered on the screen at room temperature and a humidity of 50%. Thereafter, a piston which can uniformly provide a load of 0.9 psi was placed thereon. Herein, the outer diameter of the piston was slightly smaller than 25 mm, there was no gap with the inner wall of the cylinder, and jig-jog of the cylinder was not interrupted. At this time, the weight W4 (g) of the device was measured.

Subsequently, a glass filter having a diameter of 90 mm and a thickness of 5 mm was placed in a petri dish having a diameter of 150 mm, and saline (0.9 wt% sodium chloride aqueous solution) was poured in the dish. At this time, the saline was poured until the surface level of the saline became equal to the upper surface of the glass filter. One sheet of filter paper with a diameter of 90 mm was placed thereon. After the measuring device was placed on the filter paper, the liquid was absorbed for 1 hour under a load. After 1 hour, the measuring device was lifted, and the weight W5 (g) was measured.

Then, absorbency under load (g/g) was calculated by using the obtained weight values according to the following Equation.

[Equation 2]

$$0.9AUL(g/g) = [W5(g) - W4(g)]/W3(g)$$

(3) Vortex time (Absorption rate, sec)

The vortex time was measured according to the Japanese standard method (JIS K 7224).

Specifically, 50 mL of saline (0.9 wt% sodium chloride aqueous solution) at 24 °C and a magnetic bar (8 mm in diameter, 31.8 mm in length) were put into a 100 ml beaker, and stirred at 600 rpm. 2.0 g of a super absorbent polymer having a particle diameter of 300 to 600 $\mu$m was added to the stirring saline, and the time taken until the vortex disappeared was measured in seconds to calculate the vortex time.

[Table 1]

| | Photoinitiator content* (mol%) | Redox pair | Redox pair content* (mol%) | Molar ratio of redox pair/ photoinitiator | CRC (g/g) | 0.9 AUL (g/g) | Vortex time (sec) |
|---|---|---|---|---|---|---|---|
| Comp. Ex. 1 | 0.0015 | none | - | - | 32.7 | 23.3 | 33 |
| Ex. 1 | 0.0015 | SMBS/SPS | 0.018 | 12.00 | 32.4 | 22.5 | 22 |
| Ex. 2 | 0.0015 | SMBS/SPS | 0.01 | 6.67 | 32.2 | 22.6 | 21 |
| Ex. 3 | 0.0015 | SMBS/SPS | 0.005 | 3.33 | 32.5 | 22.9 | 22 |
| Ex. 4 | 0.0015 | SMBS/SPS | 0.003 | 2.00 | 32.6 | 22.4 | 25 |
| Ex. 5 | 0.0015 | ascorbic acid/ hydrogen peroxide | 0.018 | 12.00 | 32.4 | 22.7 | 24 |
| Ex. 6 | 0.0015 | ascorbic acid/ hydrogen peroxide | 0.01 | 6.67 | 32.3 | 22.7 | 22 |
| Ex. 7 | 0.0015 | ascorbic acid/ hydrogen peroxide | 0.005 | 3.33 | 32.3 | 22.9 | 22 |
| Ex. 8 | 0.0015 | ascorbic acid/ hydrogen peroxide | 0.003 | 2.00 | 32.6 | 23.1 | 29 |
| Comp. Ex. 2 | 0.0015 | SMBS/SPS | 0.02 | 13.33 | 32.7 | 20.9 | 31 |
| Comp. Ex. 3 | 0.0015 | SMBS/SPS | 0.0015 | 1.00 | 32.3 | 22.9 | 35 |
| Comp. Ex. 4 | 0.0015 | ascorbic acid/ hydrogen peroxide | 0.02 | 13.33 | 34.1 | 17.9 | 35 |
| Comp. Ex. 5 | 0.0015 | ascorbic acid/ hydrogen peroxide | 0.0015 | 1.00 | 33.3 | 20.9 | 36 |
| * based on 100 mol% of acrylic acid | | | | | | | |

Referring to Table 1, it was confirmed that the super absorbent polymers of Examples 1 to 8 to which a reducing agent and an oxidizing agent forming a redox pair with each other were added had centrifuge retention capacity and absorbency under load equal to or higher than those of the super absorbent polymer of Comparative Example 1 to which the redox pair was not added while having significantly improved absorption rate. However, it can be seen from Comparative Examples 2 to 5 that the absorption rate improvement effect cannot be obtained when the amount of the redox pair added is 1 mol or less, or exceeds 13 mol based on 1 mol of the photoinitiator.

## Claims

1.　A preparation method for a super absorbent polymer, comprising the steps of:

　　preparing a monomer composition by mixing an acrylic acid-based monomer having at least partially neutralized acidic groups; an internal cross-linking agent; a photoinitiator; a thermal initiator; a foaming agent; and a reducing agent and an oxidizing agent forming a redox pair with each other,

preparing a hydrogel polymer by cross-linking polymerization of the monomer composition,

forming a base resin in the form of powder by drying and pulverizing the hydrogel polymer, and

forming a surface cross-linked layer by further cross-linking a surface of the base resin in the presence of a surface cross-linking agent,

wherein each of the reducing agent and the oxidizing agent is contained in an amount of greater than 1 mol to 13 mol or less based on 1 mol of the photoinitiator.

2. The preparation method for a super absorbent polymer of Claim 1,
wherein each of the reducing agent and the oxidizing agent is contained in an amount of 2 mol to 12 mol based on 1 mol of the photoinitiator.

3. The preparation method for a super absorbent polymer of Claim 1,
wherein each of the reducing agent and the oxidizing agent is contained in an amount of greater than 0.0015 mol% to less than 0.02 mol% based on 100 mol% of the acrylic acid-based monomer.

4. The preparation method for a super absorbent polymer of Claim 1,
wherein the reducing agent is sodium metabisulfite, and the oxidizing agent is sodium persulfate.

5. The preparation method for a super absorbent polymer of Claim 1,
wherein the reducing agent is ascorbic acid, and the oxidizing agent is hydrogen peroxide.

6. The preparation method for a super absorbent polymer of Claim 1,
wherein the foaming agent is at least one selected from the group consisting of sodium bicarbonate, sodium carbonate, potassium bicarbonate, potassium carbonate, calcium bicarbonate, calcium carbonate, magnesium bicarbonate, and magnesium carbonate.

7. The preparation method for a super absorbent polymer of Claim 1,
wherein the foaming agent is contained in an amount of 0.05 to 5 parts by weight based on 100 parts by weight of the acrylic acid-based monomer.

8. The preparation method for a super absorbent polymer of Claim 1,
wherein the preparation of the monomer composition comprises the steps of:

i) adding an alkali material to a mixture containing an acrylic acid-based monomer, an internal cross-linking agent, and a photoinitiator to neutralize at least a portion of acidic groups of the acrylic acid-based monomer, and

ii) adding a thermal initiator, a foaming agent, and a reducing agent and an oxidizing agent forming a redox pair with each other to the mixture obtained in step i).

# EP 4 269 478 A1

## INTERNATIONAL SEARCH REPORT

| | International application No. |
|---|---|
| | **PCT/KR2022/015332** |

**A. CLASSIFICATION OF SUBJECT MATTER**

**C08J 3/24**(2006.01)i; **C08J 3/12**(2006.01)i; **C08F 20/06**(2006.01)i; **C08F 4/40**(2006.01)i; **C08J 9/00**(2006.01)i; **C08J 9/08**(2006.01)i

According to International Patent Classification (IPC) or to both national classification and IPC

**B. FIELDS SEARCHED**

Minimum documentation searched (classification system followed by classification symbols)

C08J 3/24(2006.01); A61L 15/00(2006.01); C08F 2/10(2006.01); C08F 2/50(2006.01); C08F 20/06(2006.01); C08F 220/06(2006.01); C08F 220/56(2006.01); C08F 222/38(2006.01); C08F 4/04(2006.01); C08F 4/32(2006.01); C08K 3/011(2018.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), Google & keywords: 고흡수제(absorbent, super-absorbent, SAP), 아크릴산(acrylic acid), 광 개시제(photo-initiator), 열 개시제(thermal initiator), 레독스(redox)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0037450 A (LG CHEM, LTD.) 06 April 2021 (2021-04-06)<br>See claims 1-11; and paragraphs [0077] and [0135]-[0140]. | 1-8 |
| Y | EP 0827753 A2 (NIPPON SHOKUBAI CO., LTD.) 11 March 1998 (1998-03-11)<br>See page 10; and claims 1-10. | 1-8 |
| Y | JP 2009-102466 A (ASAHI KASEI CHEMICALS CORP.) 14 May 2009 (2009-05-14)<br>See claims 1-10. | 1-8 |
| Y | CN 103214616 A (SOUTH CHINA UNIVERSITY OF TECHNOLOGY) 24 July 2013 (2013-07-24)<br>See claims 1-7. | 1-8 |
| Y | CN 111718438 A (EAST CHINA UNIVERSITY OF SCIENCE AND TECHNOLOGY) 29 September 2020 (2020-09-29)<br>See claims 1-5. | 1-8 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 February 2023** | **02 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

13

**INTERNATIONAL SEARCH REPORT**

| International application No. |
| --- |
| **PCT/KR2022/015332** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2004-085496 A1 (BASF AKTIENGESELLSCHAFT) 07 October 2004 (2004-10-07)<br>    See claims 1-28; and pages 18 and 21. | 1-8 |
| A | CN 108003270 A (GUANGZHOU LUNALER HEALTH PRODUCT TECH. CO., LTD.) 08 May 2018<br>(2018-05-08)<br>    See abstract; and claims 1-8. | 1-8 |

Form PCT/ISA/210 (second sheet) (July 2022)

INTERNATIONAL SEARCH REPORT
Information on patent family members

International application No.

**PCT/KR2022/015332**

| Patent document cited in search report | | | Publication date (day/month/year) | Patent family member(s) | | | Publication date (day/month/year) |
|---|---|---|---|---|---|---|---|
| KR | 10-2021-0037450 | A | 06 April 2021 | None | | | |
| EP | 0827753 | A2 | 11 March 1998 | CN | 1154663 | C | 23 June 2004 |
| | | | | CN | 1179433 | A | 22 April 1998 |
| | | | | CN | 1229424 | C | 30 November 2005 |
| | | | | CN | 1475517 | A | 18 February 2004 |
| | | | | DE | 69724052 | T2 | 17 June 2004 |
| | | | | EP | 0827753 | A3 | 16 September 1998 |
| | | | | EP | 0827753 | B1 | 13 August 2003 |
| | | | | EP | 1374919 | A2 | 02 January 2004 |
| | | | | EP | 1374919 | A3 | 07 April 2004 |
| | | | | EP | 1374919 | B1 | 06 October 2010 |
| | | | | ID | 18077 | A | 26 February 1998 |
| | | | | JP | 10-057805 | A | 03 March 1998 |
| | | | | JP | 10-060014 | A | 03 March 1998 |
| | | | | JP | 10-114801 | A | 06 May 1998 |
| | | | | JP | 10-251310 | A | 22 September 1998 |
| | | | | JP | 10-251530 | A | 22 September 1998 |
| | | | | JP | 11-043508 | A | 16 February 1999 |
| | | | | JP | 3515679 | B2 | 05 April 2004 |
| | | | | JP | 3895422 | B2 | 22 March 2007 |
| | | | | US | 6107358 | A | 22 August 2000 |
| JP | 2009-102466 | A | 14 May 2009 | JP | 5116088 | B2 | 09 January 2013 |
| CN | 103214616 | A | 24 July 2013 | CN | 103214616 | B | 02 September 2015 |
| CN | 111718438 | A | 29 September 2020 | None | | | |
| WO | 2004-085496 | A1 | 07 October 2004 | AT | 448253 | T | 15 November 2009 |
| | | | | BR | PI0408557 | A | 21 March 2006 |
| | | | | BR | PI0408557 | B1 | 27 June 2017 |
| | | | | CN | 1317308 | C | 23 May 2007 |
| | | | | CN | 1764673 | A | 26 April 2006 |
| | | | | EP | 1611165 | A1 | 04 January 2006 |
| | | | | EP | 1611165 | B1 | 11 November 2009 |
| | | | | JP | 2006-522181 | A | 28 September 2006 |
| | | | | JP | 5192689 | B2 | 08 May 2013 |
| | | | | MX | PA05009236 | A | 19 October 2005 |
| | | | | US | 2006-0252913 | A1 | 09 November 2006 |
| | | | | US | 7528291 | B2 | 05 May 2009 |
| CN | 108003270 | A | 08 May 2018 | CN | 108003270 | B | 12 March 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210187268

- KR 1020220129533

**Non-patent literature cited in the description**

- **REINHOLD SCHWALM.** UV Coatings: Basics, Recent Developments and New Application. Elsevier, 2007, 115

- **ODIAN.** Principle of Polymerization. Wiley, 1981, 203